Europäisches Patentamt

European Patent Office

Office européen des brevets

(19)

(11) Veröffentlichungsnummer: **0 226 759 B1**

# EUROPÄISCHE PATENTSCHRIFT

(12)

(45) Veröffentlichungstag der Patentschrift: **10.04.91**

(51) Int. Cl.⁵: **C08G 65/30, C08G 65/20**

(21) Anmeldenummer: **86114926.8**

(22) Anmeldetag: **27.10.86**

(54) **Verfahren zur Depolymerisation von Polyoxibutylenpolyoxialkylenglykolen und Polyoxibutylenpolyoxialkylenethern.**

(30) Priorität: **21.11.85 DE 3541155**

(43) Veröffentlichungstag der Anmeldung:
**01.07.87 Patentblatt 87/27**

(45) Bekanntmachung des Hinweises auf die
Patenterteilung:
**10.04.91 Patentblatt 91/15**

(84) Benannte Vertragsstaaten:
**BE DE FR GB NL**

(56) Entgegenhaltungen:
**EP-A- 0 004 273**
**EP-A- 0 006 107**
**EP-A- 0 052 213**
**EP-A- 0 158 060**
**US-A- 4 115 408**

(73) Patentinhaber: **BASF Aktiengesellschaft**
**Carl-Bosch-Strasse 38**
**W-6700 Ludwigshafen(DE)**

(72) Erfinder: **Müller, Herbert, Dr.**
**Carostrasse 53**
**W-6710 Frankenthal(DE)**

## Beschreibung

Die Erfindung betrifft ein Verfahren zur Depolymerisation von niedermolekularen Polyoxibutylenpolyoxi-1,2-alkylenglykolen und/oder niedermolekularen Polyoxibutylenpolyoxi-1,2-alkylenethern, wie sie durch Copolymerisation von Tetrahydrofuran mit 1,2-Alkylenoxiden an kationischen Katalysatoren neben den höhermolekülaren Copolymerisaten entstehen, zu Tetrahydrofuran, Dioxan und 2-Methyldioxolan-1,3.

In GB-PS 854 958 ist ein Verfahren zur Copolymerisation von Tetrahydrofuran und 1,2-Alkylenoxiden beschrieben, bei dem man die Polymerisation durch Bleicherde-Katalysatoren in Gegenwart von Verbindungen mit reaktivem Wasserstoff bewirkt. Als Nebenprodukte fallen bei diesem Verfahren verhältnismäßig große Mengen niedermolekulare Produkte an, die überwiegend aus den oligomeren cyclischen Ethern und Glykolen bestehen.

Bei den unerwünschten oligomeren cyclischen Ethern handelt es sich um Verunreinigungen und inertes Material, deren Entfernung aus den Polymerisaten erforderlich ist, um die polymeren Glykole als Ausgangsstoffe für die Herstellung von Polyurethanen verwenden zu können. Deshalb hat es nicht an Versuchen gefehlt, die Entstehung dieser oligomeren cyclischen Ether zu vermeiden. In US-PS 4 127 513 und 4 228 272 sind Verfahren beschrieben, bei denen mit besonders präparierten Montmorilloniten die Entstehung der cyclischen Ether teilweise eingeschränkt wird.

Man hat auch schon versucht, die oligomeren cyclischen Ether durch Destillation aus den Copolymerisaten zu entfernen. Nach US-PS 4 306 058 sollen die oligomeren cyclischen Ether aus den Copolymerisaten durch Extraktion mit überkritischen Gasen entfernt werden. Sowohl bei der destillativen Abtrennung durch Kurzweg-Vakuumdestillation als auch bei der Extraktion mit überkritischen Gasen fallen die oligomeren cyclischen Ether zusammen mit etwa der gleichen Menge niedermolekularen Copolymeren mit Glykol-Struktur an. In EP-PS 6 107 ist eine Methode beschrieben, die oligomeren cyclischen Ether im Copolymerisat durch die Einwirkung von Bleicherden im Temperaturbereich von 70-150°C, insbesondere 80-120°C, selektiv zu Tetrahydrofuran, Wasser und verschiedenen Nebenprodukten zu ersetzen. Bei diesen Reaktionsbedingungen werden aber die niedermolekularen copolymeren Polyetherglykole nicht angegriffen und zersetzt.

Es wurde nun gefunden, daß man auch die niedermolekularen copolymeren Polyetherglykole abbauen und somit deren Monomere erneut der Polymerisation zuführen kann, wenn man die niedermolekularen Glykole und/oder die Ether aus den höhermolekularen Copolymerisaten durch Vakuumdestillation oder Extraktion abrennt und die abgetrennten Produkte zusammen in Gegenwart von saüeraktivierter oder synthetischen Zeolithen in der H-Form auf Temperaturen von 150 bis 250°C erhitzt.

Nach diesem Verfahren kann man die durch Vakuumdestillation oder Extraktion z.B. mit überkritischen Gasen gewonnenen niedermolekularen Gemische aus copolymeren Etherglykolen und oligomeren cyclischen Ethern durch Erhitzen in Gegenwart von Bleicherden bei Normaldruck oder im Vakuum vollständig zu Wasser, Tetrahydrofuran, Dioxan und 2-Methyl-dioxolan-1,3 zersetzen und erneut für die Polymerisation verwenden. Bei den erfindungsgemäßen Bedingungen werden die copolymeren Etherglykole zusammen mit den cyclischen Ethern zersetzt, wenn man die Depolymerisation im Temperaturbereich von 150-250°C insbesondere 160-220°C, durchführt. Es ist überraschend, daß in dem höheren Temperaturbereich die Zerlegung der cyclischen Ether und der Etherglykole selektiver abläuft als im tieferen Temperaturbereich von 70 bis 150°C. Bei tieferen Temperaturen erhält man als Zersetzungsprodukte neben THF und Wasser auch verschiedene Nebenprodukte. Das erfindungsgemäße Verfahren dagegen liefert mit über 99 Mol-% Selektivität Wasser, Tetrahydrofuran, Dioxan und Dioxolane.

Bei dem erfindungsgemäßen Verfahren ist neben der Zerlegung und Rückführung der niedermolekularen Anteile in Form von Tetrahydrofuran, Dioxan-1,4 und Dioxolan auch von großer Bedeutung, daß es gelingt, auch alle nicht spezifikationsgerechten Polymeren, wie sie z.B. bei der Umstellung der Apparaturen von einer Molekulargewichtseinstellung zu der anderen anfallen, vollständig in Tetrahydrofuran, Dioxan und Dioxolan zurückzuverwandeln. Dies ist zudem wichtig, wenn durch unkontrollierte Vorgänge bei der Synthese Polymere anfallen, die der gewünschten genauen Spezifikation nicht entsprechen. Dadurch ist auch die Aufgabe, die Copolymerisation von Tetrahydrofuran und Ethylenoxid auf eine technisch befriedigende Basis zu stellen, gelöst.

Erfindungsgemäß wird das Polymere auf einfache Weise und ohne Ausbeuteverlust in monomeres Tetrahydrofuran, Dioxan und Dioxolan zurückgespalten. Letzteres ist ein wertvolles Lösungsmittel. Das erhaltene Tetrahydrofuran ist von ausreichender Reinheit und kann deshalb nach Trocknung ohne weitere Behandlung in die Polymerisation zurückgeführt werden.

Als Bleicherden für die Durchführung des erfindungsgemäßen Verfahrens sind geeignet natürlich vorkommende wasserhaltige Aluminiumhydrosilikate aus der Montmorillonit-Gruppe, z.B. die Bentonit-Tone, die vor der Anwendung durch eine Säurebehandlung gereinigt, aufgeschlossen und aktiviert werden. Durch diese Behandlung werden in dem schichtförmig aufgebauten Aluminiumhydrosilikat Erdalkali- und Alkali-Ionen durch H-Ionen ersetzt. Wie die natürlich vorkommenden, sauer aktivierten Bentonite können auch synthetisch hergestellte Zeolithe für die erfindungsgemäße Umsetzung verwendet werden.

Für die Depolymerisation der Polyetherglykole und cyclischen Polyether werden nur geringe Mengen Bleicherde benötigt. Vorteilhafte Ergebnisse werden erzielt, wenn man die Bleicherde in einer Konzentration von 0,1-5 Gew.-%, insbesondere 1-2 Gew.-%, bezogen auf das Polymere, anwendet. Man kann auch geringere oder größere Mengen anwenden. Die einmal verwendete Bleicherde kann wiederholt für Depolymerisationen verwendet werden.

Zur Durchführung des Depolymerisationsvorganges kann man die Polymeren mit Bleicherde mischen und dann auf die Reaktionstemperatur erhitzen. Über 150°C setzt eine lebhafte Reaktion ein, die allmählich verlangsamt. Nun ist es angebracht, die Reaktionstemperatur innerhalb des bevorzugten Temperaturbereiches über 150°C bis auf 210°C zu steigern. Die Reaktion beschleunigt sich mit zunehmender Temperatur. Gibt man z.B. eine Bleicherdemenge von 2 Gew.-% den Polymeren zu und depolymerisiert bei einer durchschnittlichen Reaktionstemperatur von 180-200°C, so ist die Reaktion nach 3-4 Stunden vollständig abgelaufen. Im Zersetzungsgefäß befindet sich der Katalysator und vernachlässigbar geringe Mengen organischer Substanzen. Der Katalysator kann für eine erneute Behandlung direkt verwendet werden. Werden noch höhere Temperaturen oder höhere Konzentrationen an Bleicherde angewendet, so gelingt es, die Reaktion in noch kürzerer Zeit durchzuführen. Anstelle der eben beschriebenen diskontinuierlichen Arbeitsweise kann man kontinuierlich arbeiten und in das Depolymerisationsgefäß fortlaufend die copolymeren Polyether eingeben. Die Zulaufgeschwindigkeit richtet sich dann nach der Depolymerisationsgeschwindigkeit, wobei man zweckmäßig den Füllungsgrad des Depolymerisationsgefäßes konstant hält. Will man nach längerer Zeit das Depolymerisationsgefäß von Produkt befreien, so kann man den Frischzulauf abstellen und so lange auf 200 bis 250°C den Gefäßinahlt erhitzen, bis er vollständig depolymerisiert ist.

Wegen der Wiederverwendbarkeit des eingesetzten Katalysators ist die spezifische Katalysatoreinsatzzahl sehr gering. Ein Vorteil des Verfahrens besteht darin, daß man einen Katalysator aus inertem, natürlichem, anorganischem Material verwendet, das gefahrlos deponiert werden kann.

Die in den Beispielen genannten Teile sind Gewichtsteile.

Beispiel

Ein Reaktionsgefäß, das mit Heizung, Rührer und absteigendem Kühler ausgerüstet ist, wird mit 1.000 Teilen Polyoxibutylenpolyoxialkylenglykolen, die 30 Gew.-% oligomere cyclische Ether enthalten und ein mittleres Molekulargewicht von 280 besitzen und 20 Teilen Bleicherde mit Schüttgewicht 450 g/l beschickt. Das Gemisch aus oligomeren cyclischen Ethern und Polyoxibutylenpolyoxialkylenglykolen wurde aus einem Copolymerisat erhalten, das einer Kurzwegdestillation bei 220°C und 1 mbar unterworfen worden war. Das Polymerisat bestand zu 30 Gew.-% aus Verbindungen, die sich vom Ethylenoxid und zu 70 Gew.-% aus Verbindungen, die sich vom Tetrahydrofuran ableiten. Oberhalb 150°C beginnt die Abspaltung von Wasser, Tetrahydrofuran, Dioxan-1,4 und Methyldioxolan-1,3. Im Verlaufe der Reaktion wird die Temperatur auf 210°C gesteigert. Nach 5 Stunden ist die Reaktion beendet; im Depolymerisationsgefäß verbleibt im wesentlichen nur die trockene pulverige Bleicherde. Im erhaltenen Destillat befinden sich neben geringen Mengen Wasser 70 % Tetrahydrofuran, 25 % Dioxan-1,4 und 3 % 2-Methyldioxolan-1,3. Des weiteren werden Spuren von Acetaldehyd, Ethylenoxid und Ethylenglykol gefunden. Durch fraktionierte Destillation und Trocknung gewinnt man reines Tetrahydrofuran, Dioxan-1,4 und Dioxalan.

Mit der im Rührbehälter verbliebenen wasserfreien Bleicherde werden noch 2 weitere Ansätze von 800 Teilen Polyoxibutylenpolyoxialkylenglykol mit der oben beschriebenen Zusammensetzung depolymerisiert. Eine Verringerung der Katalysatoraktivität wird hierbei nicht festgestellt. Auch diese Umsetzungen verlaufen im wesentlichen quantitativ.

Ein identisches Ergebnis erzielt man, wenn man anstelle von Bleicherde 30 Teile eines synthetischen Aluminiumsilikatzeolithen in der H-Form (KC-Perlkator D10A®) als Depolymerisator verwendet und unter den oben beschriebenen Reaktionsbedingungen die Depolymerisation vornimmt.

## Ansprüche

1. Verfahren zur Depolymerisation von niedermolekularen Polyoxibutylenpolyoxi-1,2-alkylenglykolen und/oder niedermolekularen Polyoxibutylenpolyoxi-1,2-alkylenethern zu Tetrahydrofuran, Dioxan und 2-Methyldioxolan-1,3, dadurch gekennzeichnet , daß man die niedermolekularen Glykole und/oder die Ether aus den höhermolekularen Copolymerisaten durch Vakuumdestillation oder Extraktion abtrennt und zusammen in Gegenwart von asüer aktivierter Bleicherde oder einem synthetischen Zeolithen in der H-Form auf Temperaturen von 150-250°C, erhitzt.

2. Verfahren nach Anspruch 1, dadurch gekennzeichnet, daß man 1 bis 5 Gew.-% Bleicherde, bezogen auf die copolymeren Ether, anwendet.

3. Verfahren nach Anspruch 1 bis 3, dadurch gekennzeichnet, daß man die Depolymerisation bis zur vollständigen Zersetzung des Polymerisates ausführt.

## Claims

1. A process for the depolymerization of low molecular weight polyoxybutylenepolyoxy-1,2-alkylene glycols or low molecular weight polyoxybutylenepolyoxy-1,2-alkylene ethers to give tetrahydrofuran, dioxane and 2-methyl-1,3-dioxolane, wherein the low molecular weight glycols or the ethers are separated off from the high molecular weight copolymers by distillation under reduced pressure or extraction and the separated products are heated together at 150-250−C in the presence of acid-activated bleaching earth or of a synthetic zeolite in the H form.

2. The process as claimed in claim 1, wherein from 0.1 to 5% by weight, based on the copolymeric ethers, of bleaching earth are used.

3. A process as claimed in claim 1 or 2 or 3, wherein the depolymerization is carried out until complete decomposition of the polymer has taken place.

## Revendications

1. Procédé de dépolymérisation de polyoxybutylènepolyoxy-1,2-alkylèneglycols de faible poids moléculaire et/ou de polyoxybutylene-polyoxy-1,2-alkylène-éthers de faible poids moléculaire pour l'obtention de térahydrofuranne, de dioxanne et de 2-méthyldioxolanne1,3, caractérisé en ce qu'on sépare les glycols de faible poids moléculaire et/ou les éthers d'avec les copolymères de poids moléculaire plus élevé par distillation sous vide ou extraction et on chauffe ensemble les produits séparés à des températures de 150 à 250°C en présence de terre décolorante à activité acide ou d'une zéolithe synthétique sous la forme H.

2. Procédé selon la revendication 1, caractérisé en ce qu'on utilise de 0,1 à 5% en poids de terre décolorante par rapport aux éthers copolymères.

3. Procédé selon la revendication 1 ou 2, caractérisé en ce qu'on conduit la dépolymérisation Jusqu'à la décomposition complète du polymère.